# EUROPÄISCHE PATENTSCHRIFT

(11) **EP 0 949 438 B1**
(45) Veröffentlichungstag und Bekanntmachung des Hinweises auf die Patenterteilung: **02.01.2003**
(21) Anmeldenummer: 99250086.8
(22) Anmeldetag: 19.03.1999
(51) Int. Cl.: F16K 31/06, F16K 11/052

(54) **Elektromagnetventil**
Electromagnetic valve
Soupape électromagnétique

(30) Priorität: 06.04.1998 DE 19816536
(43) Veröffentlichungstag der Anmeldung: 13.10.1999
(73) Patentinhaber: Rexroth Mecman GmbH, 30453 Hannover (DE)
(72) Erfinder: Möller, Rudolf, Dipl.-Ing., 30989 Gehrden (DE); Müller, Peter, 30457 Hannover (DE)
(74) Vertreter: Maiwald Patentanwalts GmbH

(56) Entgegenhaltungen:
- EP-B- 0 695 406
- DE-A- 3 619 818
- DE-A- 4 425 540
- US-A- 4 170 339
- US-A- 4 397 443
- US-A- 4 534 381

## Beschreibung

Gegenstand der vorliegenden Erfindung ist ein Magnetventil gemäß dem Oberbegriff des Patentanspruches 1 sowie eine aus mehreren Magnetventilen aufgebaute Ventileinheit.

Ein gattungsgemäßes Magnetventil ist aus der EP 0 695 406 B1 bekannt. Das Magnetventil besitzt ein mit fluidischen Anschlüssen versehenes Ventilgehäuse, in dem zwei je mit einem Anschluß verbindbare Ventilsitze an einer internen Druckkammer ausgebildet sind. Die Druckkammer nimmt einen Balkenanker auf, der als Verschlußelement für die Ventilsitze dient, durch eine Rückstellfeder in eine von zwei Schaltstellungen des Magnetventils vorbelastet ist und von einem Elektromagneten angetrieben ist, der mit dem Ventilgehäuse lösbar zusammengefügt ist, wobei der Balkenanker auf seiner dem Elektromagneten zugewandten Seite eine durch eine stumpfen Abwinkelung gebildete Kante aufweist. Der Balkenanker ist lose in die Druckkammer eingesetzt und mit der Kante auf einer ebenen Stützfläche ohne jegliche Lagefixierung schwenkbar gelagert.

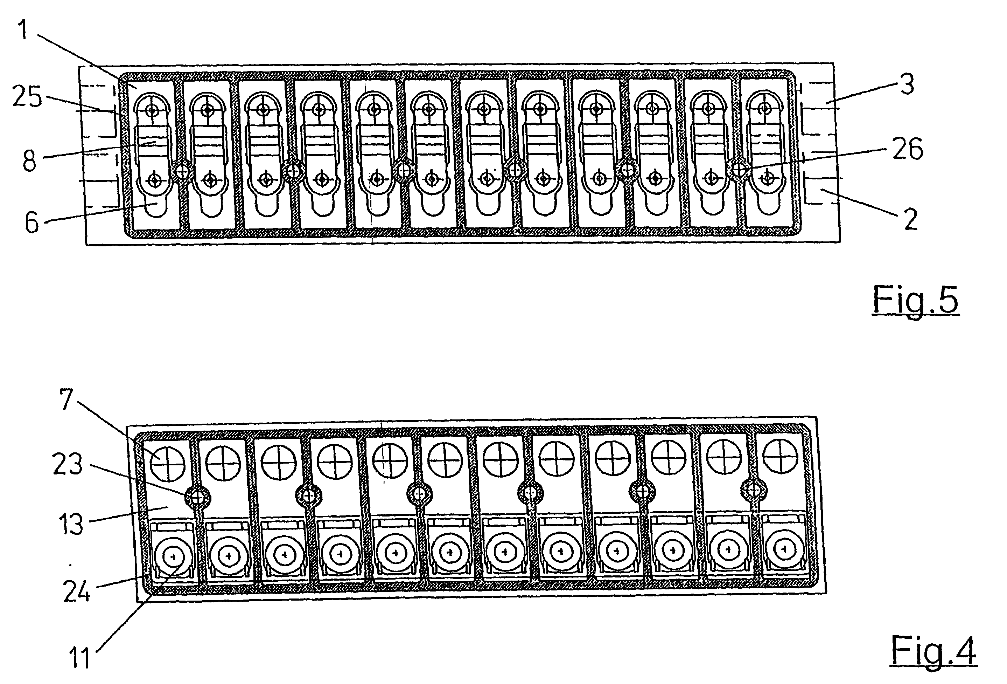

Die Figur 3 nebst Beschreibung offenbart eine Ausführungsform, bei der zwischen dem Ventilgehäuse und dem Elektromagneten eine zusätzliche Trennwand eingefügt ist. Die Trennwand ist in ihren am Anker des Elektromagneten angrenzenden Bereichen magnetisch leitend, sonst jedoch unmagnetisch ausgebildet. Durch diese Trennwand, die an der Oberseite des Ventilgehäuses dichtend befestigt ist, wird die Druckkammer verschlossen, so daß bei Bedarf der in einen Block eingegossene Elektromagnet ohne Öffnen der Druckkammer ausgetauscht werden kann. Zu diesem Zwecke ist die Trennwand recht aufwendig aufgebaut. Die selektive magnetische Leitfähigkeit wird durch Einbinden von magnetisch leitendem Material wie Eisen in magnetisch nichtleitendes Material wie Messing oder Kunststoff erzielt; angegeben ist auch die Möglichkeit, die Trennwand aus einer speziellen Eisenlegierung, die partiell magnetisch leitend ist, herzustellen. Insgesamt erhöht dieser aufwendige Aufbau der Trennwand, die einerseits magnetisch leitende Eigenschaften aufweist und andererseits auch einen druckdichten Abschluß bildet, die Herstellungskosten für ein derartig zerlegbares Magnetventil. Weiterhin ist der hier als Stellantrieb dienende Elektromagnet in einem Kunststoffblock eingebettet, also konstruktiv speziell auf das Ventilgehäuse abgestimmt und insoweit ebenfalls aufwendig zu fertigen.

Der Erfindung liegt die Aufgabe zugrunde, ein gattungsgemäßes Magnetventil dahingehend weiter zu verbessern, daß es einfacher herzustellen ist, über einfach zu fertigende Einzelteile verfügt und auch einfach zu warten ist.

Die Aufgabe wird ausgehend von einem Magnetventil gemäß dem Oberbegriff des Patentanspruches 1 in Verbindung mit dessen kennzeichnenden Merkmalen gelöst. Die Unteransprüche 2 bis 13 geben vorteilhafte Weiterbildungen der Erfindung an.

Die Erfindung schließt die technische Lehre ein, daß die Trennwand mindestens einen mit einer elastischen Dichtung versehenen Durchbruch aufweist. Der Durchbruch bzw. die Durchbrüche werden, von dem Ende des Magnetkerns und/oder des Magnetjochs abgedichtet durchdrungen, wobei der Elektromagnet selbst als Relaismagnet ausgebildet ist und in einem Spulengehäuse demontierbar angeordnet ist.

Die erfindungsgemäße Lösung kommt damit ohne eine aufwendige partiell magnetisch leitend ausgestaltete Trennwand aus. Bei der Erfindung werden die Enden des Magnetkerns und des Magnetjochs einer Relaisspule durch die Trennwand dichtend hindurchgeführt, um direkt am Balkenanker anzuliegen. Die Abdichtung wird dabei mittels elastischer Dichtungen an den entsprechenden Durchbrüchen in der Trennwand sichergestellt. Die Verwendung eines Relaismagneten als Elektromagnet ist eine einfache und kostengünstige Alternative zu einem speziell für ein Magnetventil konstruierten, dem Ventilgehäuse geometrisch angepaßten Elektromagneten. Da Relaismagneten aus der Massenfertigung kostengünstig zur Verfügung stehen und der Elektromagnet als Bauteil ein wesentlicher Preisfaktor eines Magnetventils darstellt, senkt dessen Einsatz den Gesamtpreis des Magnetventils in erheblichem Maße.

Der Relaismagnet ist samt seinem Magnetkern und -joch in einem Spulengehäuse gekapselt und insoweit geschützt vor Umwelteinflüssen untergebracht. Damit läßt sich der Relaismagnet einfach montieren und demontieren. Bei einem Austausch - beispielsweise im Reparaturfall - ist in der Regel anstelle eines Tausches des gesamten Elektromagneten, d. h. des gesamten Blockes, lediglich ein Ersatz des Relaismagneten erforderlich. Insgesamt stellt das erfindungsgemäße Magnetventil damit eine Verbesserung von gattungsgemäßen nach dem Balkenankerprinzip aufgebauten Magnetventilen dar.

Es ist vorteilhaft, wenn die unmagnetische Trennwand als separates Bauteil ausgeführt ist, das einerseits druckdicht am Ventilgehäuse zur Anlage kommt sowie andererseits am Spulengehäuse anliegt. Durch diese Ausgestaltung der Trennwand als separate Platte ist eine innerhalb des Ventilgehäuses angeordnete Druckkammer leicht von außen her zugänglich. Somit kann der innenliegende Balkenanker in einfacher Weise montiert oder demontiert werden. Ebenso kann die unmagnetische Trennwand auch als Außenwand ein fester Bestandteil des Ventilgehäuses sein. Hierbei ist jedoch ein die Montage bzw. Demontage des Balkenankers ermöglichender Zugang zur Druckkammer zu schaffen.

Vorzugsweise weist die Trennwand einen weiteren mit einer Dichtung versehenen Durchbruch auf, an dem ein mit der Druckkammer verbundener Anschluß zusammenwirkt. Dieser Anschluß, der ohne einen Ventilsitz direkt mit der Druckkammer verbunden ist, kann als Arbeitsleitungsanschluß des Magnetventils genutzt werden. Zu diesem Zweck ist an diesem Anschluß ein Push-ln-Fitting für Druckmittelleitungen vorgesehen, der vorteilhafterweise im Spulengehäuse eingesetzt ist und eine lösbare Befestigung einer Druckmittelleitung ermöglicht.

Weiterhin ist es vorteilhaft, die Dichtungen, welche an den Durchbrüchen der Trennwand angeordnet sind, durch Anvulkanisieren herzustellen. Ein Montageschritt für das Einsetzen von separaten Dichtungen in die Durchbrüche kann insoweit entfallen. Durch das Anvulkanisieren der Dichtungen sind diese zudem unverlierbar fest mit der Trennwand verbunden.

Eine weitere, die Erfindung verbessernde Maßnahme sieht vor, daß der Balkenanker im Bereich seiner Wippstelle durch zwei ein Ende des Magnetjochs einschließende und beabstandet angeordnete Materialanhäufungen lagefixiert ist. Dadurch wird eine sichere Funktion des Ventilmechanismus ermöglicht. Die Materialanhäufungen am Balkenanker können durch Biegen eines aus Blech gefertigten Balkenankers hergestellt werden, so daß der Balkenanker insgesamt als einfaches Stanzbiegeteil ausgeführt werden kann.

Um einen elektrischen Anschluß zur Relaisspule zu schaffen, ist es vorteilhaft, daß der Elektromagnet an seiner der Trennwand abgewandten Seite zwei das Spulengehäuse durchdringende elektrische Anschlußkontaktfahnen aufweist. Diese konstruktive Maßnahme ermöglicht eine Steckverbindung zwischen dem Elektromagneten und dem Spulengehäuse. Der Elektromagnet kommt vorzugsweise an seiner der Trennwand abgewandten Seite über eine elastische Einlage am Spulengehäuse zur Anlage. Damit ist ein fester Sitz des Elektromagneten innerhalb des Spulengehäuses sichergestellt. Das Spulengehäuse kann in einfacher Weise mittels eines Befestigungselementes lösbar mit dem Ventilgehäuse verbunden werden. Ebenfalls denkbar ist es, an dieser Stelle eine Schnappverbindung vorzusehen.

Das erfindungsgemäße Magnetventil läßt sich zu einer Ventileinheit mit mehreren Magnetventilen derart kombinieren, daß mehrere Ventilgehäuse als einstückiges Bauteil in einer Reihe aneinandergefügt hergestellt sind und längs der Ventileinheit verlaufende gemeinsame Kanäle zur Druckmittelzufuhr und/oder -abfuhr bilden. Dabei kann vorzugsweise als Abdichtung zwischen den Ventilgehäusen und den jeweils zugeordneten und ebenfalls zu einer Reihe aneinandergefügten Spulengehäusen eine gemeinsame leiterförmige Dichtung vorgesehen werden. Weiterhin ist es vorteilhaft, für die so aufgebaute Ventileinheit eine einstückige und allen Magnetventilen der Ventileinheit gemeinsame separate Trennwand vorzusehen.

Weitere, die Erfindung verbessernde Maßnahmen werden nachstehend gemeinsam mit der Beschreibung einer bevorzugten Ausführungsform der Erfindung anhand der Figuren näher dargestellt. Es zeigt:
- Fig. 1: eine Ansicht von der Seite eines Magnetventils im komplett montierten Zustand,
- Fig. 2: eine Ansicht von der Seite des Ventilgehäuses mit Trennwand im vormontierten Zustand,
- Fig. 3: eine Ansicht von der Seite des Spulengehäuses mit Elektromagnet im vormontierten Zustand,
- Fig. 4: eine Ansicht von unten des Spulengehäuses einer Ventileinheit,
- Fig. 5: eine Ansicht von oben des Ventilgehäuses einer Ventileinheit ohne eingesetzte Trennwand und
- Fig. 6: eine Ansicht von oben einer zu dem Ventilgehäuse nach Figur 5 gehörenden Trennwand.

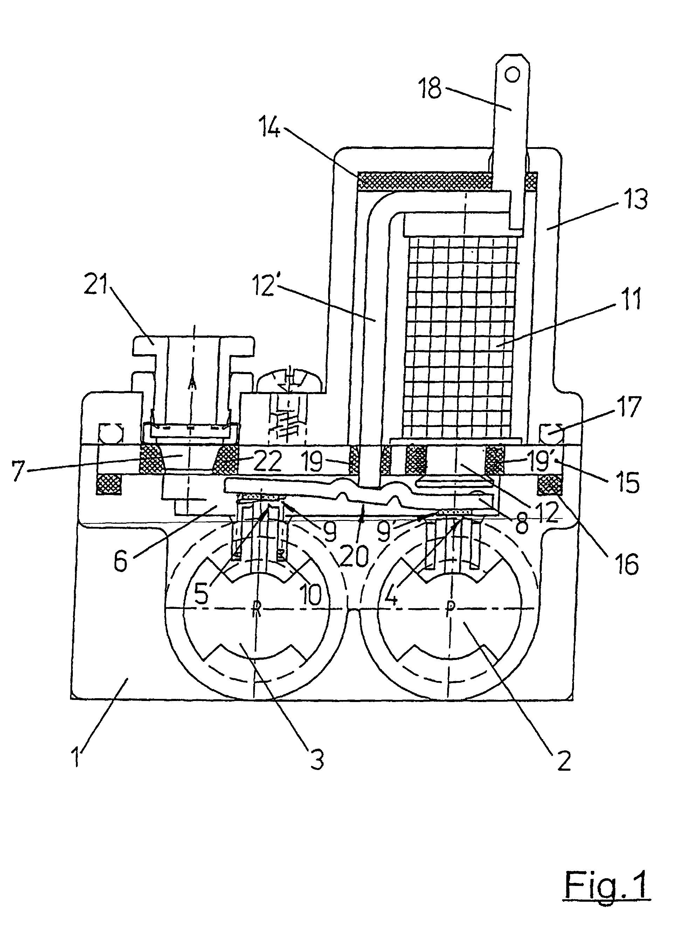

Ein Magnetventil nach Figur 1 ist aus einem Ventilgehäuse aufgebaut, in dem ein Anschluß 2 für die Speisedruckversorgung sowie ein Anschluß 3 für die Entlüftung vorgesehen ist. Die Anschlüsse 2 und 3 sind über zugeordnete Ventilsitze 4 und 5 mit einer innerhalb des Ventilgehäuses 1 angeordneten Druckkammer 6 verbindbar. Von der Druckkammer 6 geht ein weiterer Anschluß 7 ab. Der Anschluß 7 dient als Arbeitsleitungsanschluß des Magnetventils.

Die Ventilsitze 4 und 5 sind wechselnd mittels eines wippend in der Druckkammer 6 angeordneten Balkenankers 8 verschließbar. Zu diesem Zwecke trägt der Balkenanker 8 an seiner unteren Seite zwei endseitig angeordnete elastische und insoweit die Dichtwirkung mit dem Ventilsitz 4 bzw. 5 begünstigende Verschlußplatten 9 und 9'.

Damit ist das Magnetventil als 3/2-Wegeventil ausgestaltet und ermöglicht die Be- und Entlüftung einer Arbeitsleitung. In Ruhestellung - also in unbetätigtem Zustand - ist der Ventilsitz 4, an dem der Speisedruck ansteht, verschlossen. Dies bewirkt eine zwischen dem Ventilsitz 5 für die Entlüftung und der gegenüberliegenden Verschlußplatte 9 am wippend gelagerten Balkenanker 8 eingesetzte Druckfeder 10. Betätigt wird das Magnetventil mittels eines Elektromagneten 11. Der Elektromagnet 11 ist mit einem fest zugeordneten Magnetkern 12 sowie einem Magnetjoch 12' ausgestattet. Der Elektromagnet 11 ist samt Magnetkern 12 und Magnetjoch 12' innerhalb eines Spulengehäuses 13 untergebracht. Eine elastische Einlage 14 an einer Stirnseitenfläche des Elektromagneten 11 dient der Fixierung im Spulengehäuse 13. Durch das Spulengehäuse 13 sind für den elektrischen Anschluß des Elektromagneten 11 elektrische Kontaktfahnen 18 hindurchgeführt.

Zwischen dem Ventilgehäuse 1 und dem Spulengehäuse 13 ist eine als separate Platte ausgebildete unmagnetische Trennwand 15 vorgesehen. Die Trennwand 15 liegt über eine Dichtung 16 druckdicht an dem Ventilgehäuse 1 an und verschließt damit die Druckkammer 6. Ebenso ist hier zwischen der Trennwand 15 und dem Spulengehäuse 13 eine Dichtung 17 vorgesehen, deren Einsatz einen verbesserten Feuchtigkeitsschutz bietet. Die Trennwand 15 ist mit elastischen Dichtungen 19, 19' versehenen Durchbrüchen ausgestattet, durch die die Enden des Magnetkerns 12 sowie des Magnetjochs 12' abgedichtet hindurchgeführt sind. Die Dichtungen 19, 19' sind durch Anvulkanisieren mit der Trennwand 15 fest verbunden. Somit gelangt der vom Elektromagneten 11 erzeugte Magnetismus durch die Trennwand 15 hindurch in den Bereich der Druckkammer 6, in welcher der Balkenanker 8 angeordnet ist. Der gerade Balkenanker 8 liegt mit seiner Wippstelle 20 an einem Ende des Magnetjochs 12' an. Im Bereich der Wippstelle 20 ist der Balkenanker 8 mittels zweier das Ende des Magnetjochs 12' einschließender und insoweit beabstandet angeordneter Materialanhäufungen lagefixiert. Der so ausgestaltete Balkenanker 8 gestattet eine zuverlässige Funktion des Ventilmechanismus.

Um das Magnetventil von seiner Schließstellung in die Offenstellung zu bringen, wirkt nach Anlegen der Versorgungsspannung an die Anschlußkontaktfahnen 18 der dadurch erzeugte Magnetismus derart, daß die auf dem Ventilsitz 4 aufliegende Verschlußplatte 9' durch Anziehen des Balkenankers 8 an den Magnetkern 12 abgehoben wird, so daß der Anschluß 7 für die Arbeitsleitung belüftet wird.

Der Anschluß 7 für die Arbeitsleitung ist mit einem in das Spulengehäuse 13 eingelassenen Push-ln-Fitting 21 ausgerüstet. Mittels des Push-ln-Fittings 21 kann eine Arbeitsleitung am Magnetventil lösbar befestigt werden. Zur Gewährleistung des Anschlusses weist die Trennwand 15 an dieser Stelle einen weiteren mit einer elastischen Dichtung 22 versehenen Durchbruch auf.

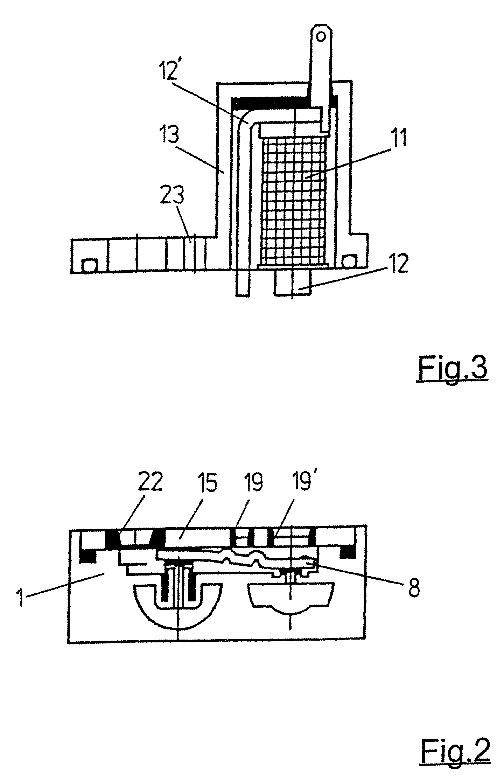

Im vormontierten Zustand gemäß Figur 2 ist das Ventilgehäuse 1 bereits mit der Trennwand 15 bestückt. Der Balkenanker 8 befindet sich innerhalb der Druckkammer 6. Die Dichtungen 19, 19' und 22 an den Durchbrüchen in der Trennwand 15 sind an ihrem oberen Rand abgeschrägt. Die Abschrägungen ermöglichen eine leichte Montage des zugeordneten Elektromagneten 22 samt Magnetkern 12 und Magnetjoch 12' nach Figur 3, der bereits im Spulengehäuse 13 vormontiert ist. Der Elektromagnet 11 läßt sich im Reparaturfall leicht aus dem Spulengehäuse 13 entfernen und gegebenenfalls ersetzen.

Zwischen dem Ventilgehäuse 1 und dem Spulengehäuse 13 ist schließlich eine Schraubverbindung vorgesehen. Die Schraubverbindung wird über eine Durchgangsbohrung 23 im Spulengehäuse 13 realisiert, wobei das Verbindungselement im Ventilgehäuse 1 eingeschraubt ist. Da sowohl das Spulengehäuse 13 als auch das Ventilgehäuse 1 aus Kunststoff bestehen, kann als Verbindungselement beispielsweise eine einfache Karosserieschraube verwendet werden.

Das vorstehend beschriebene Magnetventil läßt sich in vorteilhafter Weise zum Aufbau einer Ventileinheit verwenden. Hierfür sind gemäß Figur 4 mehrere Spulengehäuse 13 fest aneinandergereiht, so daß sich ein einstückiges Bauteil ergibt, in dem die Elektromagneten 11 eingesetzt sind. Als Abdichtung kommt hierbei eine allen Spulengehäusen 13 gemeinsame leiterförmige Dichtung 24 zum Einsatz. Wegen der festen Aneinanderreihung der einzelnen Spulengehäuse sind die der Befestigung dienenden Durchgangsbohrungen 23 in größeren Abständen angeordnet

Die Figur 5 zeigt die zu der vorstehend beschriebenen Spulengehäuseanordnung korrespondierende Ventilgehäuseanordnung. Mehrere Ventilgehäuse 1 sind ebenso wie die Spulengehäuse 13 fest aneinandergereiht, so daß sich ebenfalls ein einstückiges Bauteil ergibt. Der Balkenanker 8 ist seitlich in der Druckkammer 6 geführt. Korrespondierend zu den Durchgangsbohrungen 23 (Figur 4) besitzt die Ventileinheit auf der Ventilgehäuseseite Grundbohrungen 26 für die Verschraubung. Die jeweiligen Anschlüsse 2 und 3 für den Speisedruck bzw. für die Entlüftung bilden entlang der Ventileinheit je einen gemeinsamen in der Figur nicht erkennbaren Kanal. Zur Abdichtung gegenüber der ebenfalls hier nicht dargestellten Trennwand kommt eine dazwischenliegende leiterförmige Dichtung 24 zum Einsatz.

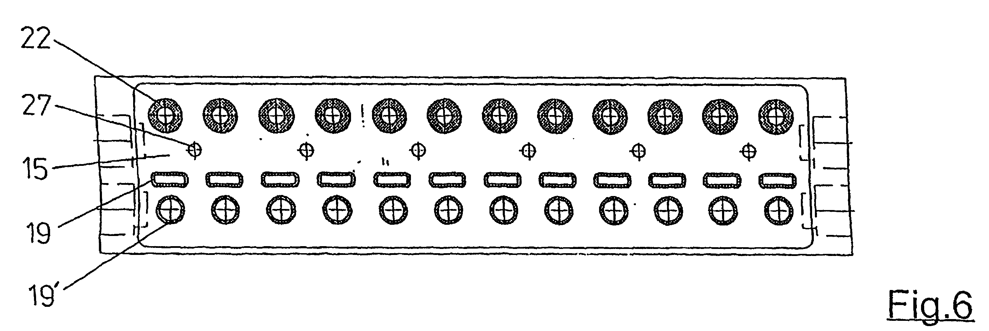

Für die Ventileinheit ist nach Figur 6 eine einstückige, allen Magnetventilen der Ventileinheit gemeinsame, separate Trennwand 15 vorgesehen. Die Trennwand 15 weist neben den mit Dichtungen 19, 19' und 22 versehenen Durchbrüchen auch Durchgangsbohrungen 27 für die Verschraubung auf.

Die Ventileinheit kann als Mehrfachanordnung eine unterschiedliche Anzahl von Magnetventilen beinhalten. Sollte die Anzahl der in einer Ventileinheit integrierten Magnetventile nicht ausreichend sein, so lassen sich auch mehrere Ventileinheiten stimflächenseitig beliebig aneinanderreihen.

### Bezugszeichenliste

- **1**: Ventilgehäuse
- **2**: Anschluß, Speisedruck
- **3**: Anschluß, Entlüftung
- **4**: Ventilsitz, Speisedruck
- **5**: Ventilsitz, Entlüftung
- **6**: Druckkammer
- **7**: Anschluß, Arbeitsleitung
- **8**: Balkenanker
- **9**: Verschlußplatte
- **10**: Druckfeder
- **11**: Elektromagnet
- **12**: Magnetkern u. -joch
- **13**: Spulengehäuse
- **14**: Einlage
- **15**: Trennwand
- **16**: Dichtung
- **17**: Dichtung
- **18**: Anschlußkontaktfahnen
- **19**: Dichtung
- **20**: Wippstelle
- **21**: Push-In-Fitting
- **22**: Dichtung
- **23**: Durchgangsbohrung
- **24**: Dichtung, leiterförmig
- **25**: Dichtung, leiterförmig
- **26**: Grundbohrung
- **27**: Durchgangsbohrung

## Patentansprüche

1. Magnetventil mit einem Ventilgehäuse (1), an dem mindestens ein fluidischer Anschluß (2, 3) angeordnet ist, der über einen zugeordneten Ventilsitz (4 bzw. 5) mit einer innenliegenden Druckkammer (6) in Verbindung steht, die mit einem weiteren fluidischen Anschluß (7) verbunden ist und die mittels einer druckdichten unmagnetischen Trennwand (15) verschlossen ist, wobei ein Elektromagnet (11) mit zugeordnetem Magnetkern (12) und daran befestigtem Magnetjoch (12') als Stellantrieb vorgesehen ist, die mit einem in der Druckkammer (6) wippend angeordneten und mit dem Ventilsitz (4, 5) als Verschlußelement zusammenwirkenden Balkenanker (8) durch die Trennwand (15) hindurch korrespondieren,
**dadurch gekennzeichnet,**
**daß** die Trennwand (15) mindestens einen mit einer elastischen Dichtung (19, 19') versehenen Durchbruch aufweist, der von dem Ende des Magnetkerns (12) und/oder des Magnetjochs (12') abgedichtet durchdrungen ist und daß der Elektromagnet (11) als Relaismagnet ausgebildet ist und in einem Spulengehäuse (13) demontierbar angeordnet ist.

2. Magnetventil nach Anspruch 1,
**dadurch gekennzeichnet,**
**daß** die unmagnetische Trennwand (15) als separates Bauteil ausgeführt ist, einerseits druckdicht am Ventilgehäuse (1) zur Anlage kommt und andererseits am Spulengehäuse (13) anliegt.

3. Magnetventil nach Anspruch 1,
**dadurch gekennzeichnet,**
**daß** die unmagnetische Trennwand (15) als Außenwand ein fester Bestandteil des Ventilgehäuses (1) ist.

4. Magnetventil nach einem der vorstehenden Ansprüche,
**dadurch gekennzeichnet,**
**daß** die Trennwand (15) einen mit einer Dichtung (22) versehenen Durchbruch aufweist, von dem der mit der Druckkammer (6) verbundene Anschluß (7) abgeht.

5. Magnetventil nach einem der vorstehenden Ansprüche,
**dadurch gekennzeichnet,**
**daß** als Anschluß (7) ein Push-ln-Fitting für Druckmittelleitungen vorgesehen ist, der im Spulengehäuse (13) eingesetzt ist.

6. Magnetventil nach einem der vorstehenden Ansprüche,
**dadurch gekennzeichnet,**
**daß** die Dichtungen (19, 19', 22) an die Durchbrüche der Trennwand (15) durch Anvulkanisieren angebracht sind.

7. Magnetventil nach einem der vorstehenden Ansprüche,
**dadurch gekennzeichnet,**
**daß** der gerade Balkenanker (8) im Bereich einer Wippstelle (20) durch zwei das eine Ende des Magnetjochs (12') einschließende und beabstandet angeordnete Materialaufhäufungen lagefixiert ist.

8. Magnetventil nach einem der vorstehenden Ansprüche,
**dadurch gekennzeichnet,**
**daß** der Elektromagnet (11) an der der Trennwand (15) abgewandten Seite zwei das Spulengehäuse (13) durchdringende elektrische Anschlußkontaktfahnen (18) aufweist.

9. Magnetventil nach einem der vorstehenden Ansprüche,
**dadurch gekennzeichnet,**
**daß** der Elektromagnet (11) an der der Trennwand (15) abgewandten Seite über eine elastische Einlage (14) am Spulengehäuse (13) zur Anlage kommt.

10. Magnetventil nach einem der vorstehenden Ansprüche,
**dadurch gekennzeichnet,**
**daß** das Spulengehäuse (13) mittels eines Befestigungselementes lösbar mit dem Ventilgehäuse (1) verbunden ist.

11. Ventileinheit bestehend aus Ventilen nach einem der vorstehenden Ansprüche,
**dadurch gekennzeichnet,**
**daß** mehrere Ventilgehäuse (1) als einstückiges Bauteil in einer Reihe aneinandergefügt sind und gemeinsame Kanäle für die Anschlüsse (2) der Belüftung sowie die Anschlüsse (3) der Entlüftung bilden.

12. Ventileinheit nach Anspruch 11,
**dadurch gekennzeichnet,**
**daß** als Abdichtung zwischen den Ventilgehäusen (1) und den jeweils zugeordneten und ebenfalls zu einer Reihe aneinandergefügten Spulengehäusen (13) eine gemeinsame leiterförmige Dichtung (25) vorgesehen ist.

13. Ventileinheit nach Anspruch 11,
**dadurch gekennzeichnet,**
**daß** eine einstückige allen Magnetventilen der Ventileinheit gemeinsame separate Trennwand (15) vorgesehen ist.

## Claims

1. An electrovalve comprising a valve housing (1), on which at least one fluidic terminal (2, 3) is arranged in communication with an interior pressure chamber (6) via an associated valve seat (4 resp. 5), which pressure chamber is connected with a further fluidic terminal (7) and is sealed by means of a pressure-tight non-magnetic partition (15), with an electromagnet (11) with an associated magnet core (12) and a thereon attached magnet yoke (12') being provided as an actuator, which are in correspondence through the partition (15) by a beam anchor (8) disposed rooking in the pressure chamber (6) and cooperating with the valve seat (4,5) as a sealing element,
**characterized in that**
the partition (15) has at least one break-through provided with an elastic seal (19, 19'), which break-through is penetrated in a sealing manner by the end of the magnet core (12) and/or the magnet yoke (12'), and that the electromagnet (11) is configured as a relay magnet, and is detachably arranged in a coil housing (13).

2. The electrovalve according to claim 1,
**characterized in that**
the non-magnetic partition (15) is realized as a separate component and, for one, comes into abutment against the valve housing (1) in a pressure-tight manner and, for another, is in abutment against the coil housing (13).

3. The electrovalve according to claim 1,
**characterized in that**
the non-magnetic partition (15) as an outer wall is an integral part of the valve housing (1).

4. The electrovalve according to any one of the preceding claims,
**characterized in that**
the partition (15) has a break-through provided with a seal (22), from which break-through departs the terminal (7) connected with the pressure chamber (6).

5. The electrovalve according to any one of the preceding claims,
**characterized in that**
as the terminal (7), a push-in fitting is provided for pressure fluid lines, which is inserted in the coil housing (13).

6. The electrovalve according to any one of the preceding claims,
**characterized in that**
the seals (19,19', 22) are mounted onto the break-throughs of the partition (15) by way of vulcanization.

7. The electrovalve according to any one of the preceding claims,
**characterized in that**
the straight beam anchor (8), in the zone of a rocking location (20), is fixed in position by means of two material accumulations embracing the one end of the magnet yoke (12') and arranged spaced apart.

8. The electrovalve according to any one of the preceding claims,
**characterized in that**
the electromagnet (11), on the side facing away from the partition (15), has two electric terminal connecting lugs (18) penetrating the coil housing (13).

9. The electrovalve according to any one of the preceding claims,
**characterized in that**
the electromagnet (11), on the side facing away from the partition (15), comes into abutment against the coil housing (13) via an elastic inlay.

10. The electrovalve according to any one of the preceding claims,
**characterized in that**
the coil housing (13) is releasably connected with the valve housing (1) by means of an attachment element.

11. A valve unit comprised of valves according to any one of the preceding claims,
**characterized in that**
plural valve housings (1), as a one-piece constructional part, are assembled in a row and form common conduits for the terminals (2) of the incoming ventilation and the terminals (3) of the outgoing ventilation.

12. The valve unit according to claim 11,
**characterized in that**
as the sealing between the valve housings (1) and the respective associated coil housings (13) that are likewise assembled in a row, a common ladder-shaped seal (25) is provided.

13. The valve unit according to claim 11,
**characterized in that**
a one-piece separate partition (15) is provided in common for all electrovalves of the valve unit.

## Revendications

1. Valve magnétique avec un boîtier de valve (1) auquel au moins un raccord (2, 3) de fluide est disposé, qui, par un siège de valve (4 ou 5) affecté est relié avec une chambre de compression (6) reposant à l'intérieur, qui est reliée avec un autre raccord (7) de fluide et qui est fermée par une paroi de séparation (15) amagnétique, étanche à la pression, un électro-aimant (11) avec un noyau d'aimant (12) affecté et une culasse magnétique (12') qui y est fixée étant prévu en tant qu'actionneur, qui correspondent au travers de la paroi de séparation (15) par une lame basculante (8) disposée dans la chambre de compression (6) de manière basculante et agissant en élément de fermeture conjointement avec le siège de valve (4, 5),
**caractérisée en ce que**
la paroi de séparation (15) présente au moins une percée pourvue d'un joint élastique (19, 19'), traversée de manière étanchéisée par l'extrémité du noyau d'aimant (12) et/ou de la culasse magnétique (12') et que l'électro-aimant (11) est formé en tant que relais magnétique et disposé dans un boîtier à bobine (13) de manière démontable.

2. Valve magnétique selon la revendication 1,
**caractérisée en ce que**
la paroi de séparation (15) amagnétique est exécutée en tant que pièce séparée qui, d'un côté, est en appui contre le boîtier de valve (1) de manière étanche à la pression et, de l'autre côté, s'appuie contre le boîtier à bobine (13).

3. Valve magnétique selon la revendication 1,
**caractérisée en ce que**
la paroi de séparation (15) amagnétique, en tant que paroi extérieure, est un composant fixe du boîtier de valve (1).

4. Valve magnétique selon l'une des revendications précédentes,
**caractérisée en ce que**
la paroi de séparation (15) présente une percée pourvue d'un joint (22) dont part le raccord (7) relié à la chambre de compression (6).

5. Valve magnétique selon l'une des revendications précédentes,
**caractérisée en ce que**,
en tant que raccord (7), un "push-in-fitting" pour des lignes de fluide hydraulique est prévu, qui est inséré dans le boîtier à bobine (13).

6. Valve magnétique selon l'une des revendications précédentes,
**caractérisée en ce que**
les joints (19, 19', 22) sont fixés par vulcanisation à la percée de la paroi de séparation (15).

7. Valve magnétique selon l'une des revendications précédentes,
**caractérisée en ce que**
la lame basculante (8) droite, dans la région d'un emplacement de basculement (20), est fixée en position par deux accumulations de matériau, espacées et enfermant une extrémité de la culasse magnétique (12').

8. Valve magnétique selon l'une des revendications précédentes,
**caractérisée en ce que**
l'électro-aimant (11) présente au côté détourné de la paroi de séparation (15) deux cosses de raccordement (18) électrique traversant le boîtier à bobine (13).

9. Valve magnétique selon l'une des revendications précédentes,
**caractérisée en ce que**
l'électro-aimant (11) vient en appuie contre le boîtier à bobine (13) au travers d'une pièce rapportée élastique (14) du côté détourné de la paroi de séparation (15).

10. Valve magnétique selon l'une des revendications précédentes,
**caractérisée en ce que**
le boîtier à bobine (13) est relié de manière amovible au boîtier de valve (1) au moyen d'un élément de fixation.

11. Unité de valves se composant de valves selon l'une des revendications précédentes,
**caractérisée en ce que**
plusieurs boîtiers de valve (1) sont assemblés en une rangée en tant que pièce monobloc et forment des canaux communs pour les raccordements (2) d'aspiration ainsi que pour les raccordements (3) d'évacuation.

12. Unité de valves selon la revendication 11,
**caractérisée en ce**
**qu'**en tant qu'étanchéisation entre les boîtiers de valve (1) et les boîtiers à bobine (13) qui leur sont chacun affectés et également ajoutés côte à côte en une rangée, un joint (25) commun en forme d'échelle est prévu.

13. Unité de valves selon la revendication 11,
**caractérisée en ce que**
une paroi de séparation (15) monobloc séparée, commune à toutes les valves magnétiques de l'unité de valves, est prévue.
